# EUROPÄISCHE PATENTANMELDUNG

(11) **EP 1 493 991 A2**
(43) Veröffentlichungstag der Anmeldung: **05.01.2005**
(21) Anmeldenummer: 04014413.1
(22) Anmeldetag: 19.06.2004
(51) Int. Cl.: G01C 21/00, B60K 35/00

(54) **Verfahren und Vorrichtung zum Darstellen von Informationen**

(30) Priorität: 04.07.2003 DE 10330254
(71) Anmelder: ROBERT BOSCH GMBH, 70442 Stuttgart (DE)
(72) Erfinder: Mueller, Ruediger, 31162 Bad Salzdetfurth (DE)

(57) **Zusammenfassung**

Um aus der Anzahl aller verfügbaren Informationsgehalte eines Kraftfahrzeug-Informationssystems lediglich die für einen Benutzer relevanten Informationsgehalte in gewünschter Weise darstellen zu können, ist es erfindungsgemäß vorgesehen, dass über eine Eingabeeinheit mindestens einem Teilbereich (12) der Anzeigeeinheit (10) ein vordefinierter Informationsgehalt von einem Benutzer zuordbar ist und dass die vordefinierten Informationsgehalte im jeweiligen zugeordneten Teilbereich (12) der Anzeigeeinheit (10) darstellbar sind. Hierdurch wird es für den Benutzer möglich, lediglich die für den Benutzer relevanten Informationsgehalte in vom Benutzer vordefinierten Teilbereichen (12) der Anzeigeeinheit (10) darstellen zu lassen.

## Beschreibung

### Technisches Gebiet

Die vorliegende Erfindung betrifft ein Verfahren zum Darstellen von Informationen eines Fahrzeug-Informationssystems mit den im Oberbegriff des Anspruchs 1 genannten Merkmalen und eine Vorrichtung zum Darstellen von Informationen eines Fahrzeug-Informationssystems mit den im Oberbegriff des Anspruchs 5 genannten Merkmalen.

### Stand der Technik

Vorrichtungen der gattungsgemäßen Art werden unter anderem in Kraftfahrzeugen eingesetzt, um einem Benutzer und/oder Fahrzeuginsassen gewünschte Informationen über das Fahrzeug, über das Navigationssystem, über das Radio und eventuell über weitere Zusatzgeräte zu präsentieren. Dabei ist es insbesondere wünschenswert, für sämtliche dem Benutzer zugängliche Informationen lediglich ein Anzeigeelement zu verwenden, um die Ablenkung des Benutzers vom Straßenverkehr möglichst minimal zu halten.

Durch die wachsende Anzahl der dem Benutzer eines Kraftfahrzeugs zur Verfügung stehenden Informationen, wie zum Beispiel Informationen über das Navigationssystem, Informationen über eine Musikanlage und/oder über ein Radio, Wetterinformationen und weitere Informationen über den Zustand des Fahrzeugs, wie zum Beispiel die Anzeige eines Werkstattintervalls, ist es oft nicht sinnvoll, sämtliche zur Verfügung stehenden Informationen gleichzeitig auf der Anzeigeeinheit darzustellen, denn einerseits wird der Benutzer durch die von ihm nicht gewünschten Informationen unnötigerweise abgelenkt, andererseits ist die Darstellung der für den Benutzer wichtigen Informationen nicht mehr in ausreichender Größe möglich.

Um die für den Benutzer wichtigen Informationen in ausreichender Größe und Übersichtlichkeit darstellen zu können, ist es nach dem Stand der Technik vorgesehen, lediglich einen Teil der zur Verfügung stehenden Informationen auf einem separaten, im Sichtbereich des Fahrers angeordneten Display darzustellen. Dabei wird die Komposition der darzustellenden Informationsgehalte, das heißt die Auswahl, welche Informationen dargestellt und welche Informationen nicht dargestellt werden, vom Fahrzeug- bzw. Gerätehersteller festgelegt. Für den Benutzer ist es bestenfalls möglich, verschiedene, bereits vordefinierte Anzeigeformate seriell auszuwählen, um die jeweils für ihn notwendigen Informationen dargestellt zu bekommen.

Aufgrund der unterschiedlichen Bedürfnisse unterschiedlicher Benutzer kann es mit den bekannten Verfahren und Vorrichtungen nach dem Stand der Technik nicht gewährleistet werden, dass jedem Benutzer die jeweils für ihn vorrangig wichtigen Informationsgehalte dargestellt werden. Eine werkseitige Kombination sämtlicher Informationsgehalte ist aufgrund der gestiegenen Anzahl von verfügbaren Informationen technisch nur mit erhöhtem Aufwand realisierbar. Weiterhin ist es bei voreingestellter Komposition von Informationsgehalten nicht möglich, nach dem Anschließen von Zusatzgeräten deren Informationen in gewünschter Weise einzubinden und mit den bisher verfügbaren Informationsgehalten zu kombinieren.

### Darstellung der Erfindung, Aufgabe, Lösung, Vorteile

Es ist daher Aufgabe der vorliegenden Erfindung, ein Verfahren und eine Vorrichtung zum Darstellen von Informationen anzugeben, die es einem Benutzer in einfachster Weise ermöglichen, die für ihn relevanten Informationsgehalte unter einer Anzahl verfügbarer Informationsgehalte auszuwählen und in gewünschter Weise darstellen zu lassen.

Diese Aufgabe wird erfindungsgemäß durch ein Verfahren mit den im Anspruch 1 gekennzeichneten Merkmalen und durch eine Vorrichtung mit den im Anspruch 5 gekennzeichneten Merkmalen gelöst. Vorteilhafte Ausgestaltungen und zweckmäßige Weiterbildungen der vorliegenden Erfindung sind in den jeweiligen Unteransprüchen gekennzeichnet.

Ein besonderer Vorteil des erfindungsgemäßen Verfahrens ist es, dass ein Benutzer die für ihn relevanten Informationsgehalte in der für ihn günstigsten Auswahl und Form dargestellt bekommen kann. Dazu wird über eine Eingabeeinheit mindestens einem Teilbereich einer Anzeigeeinheit oder eines Anzeigeelements ein vordefinierter Informationsgehalt vom Benutzer zugeordnet und die vordefinierten Informationsgehalte im jeweiligen zugeordneten Teilbereich einer Anzeigeeinheit dargestellt.

Entsprechend ist bei einer Vorrichtung zum Darstellen von Informationen mit mindestens einer Anzeigeeinheit und mit mindestens einer Eingabeeinheit, wobei die mindestens eine Anzeigeeinheit in mindestens zwei Teilbereiche unterteilbar ist und auf den Teilbereichen der Anzeigeeinheit vordefinierte Informationsgehalte für Fahrzeug, für Navigation und/oder für Rundfunk sowie weitere vordefinierte Informationsgehalte darstellbar sind, über die Eingabeeinheit mindestens einem Teilbereich der Anzeigeeinheit mindestens ein vordefinierter Informationsgehalt zuordbar und auf diesem Teilbereich darstellbar.

Hierdurch wird es für einen Benutzer möglich, die für ihn relevanten Informationsgehalte, zum Beispiel die Außentemperatur und den Radiosender, in bestimmten, von ihm vordefinierten Teilbereichen der Anzeigeeinheit darstellen zu lassen. Die entsprechende Auswahl der relevanten Informationsgehalte kann über die Eingabeeinheit, also durch den Benutzer, jederzeit realisiert werden. Daher ist der Benutzer nicht auf werkseitige Voreinstellungen beschränkt.

Hierdurch wird vorteilhafterweise gewährleistet, dass der Benutzer die für ihn relevanten Informationen an der Stelle der Anzeigeeinheit vorfindet, an der er sie erwartet. Weiterhin wird vermieden, dass für den Benutzer nicht relevante Informationsgehalte auf der Anzeigeeinheit dargestellt werden, die hierdurch nachteilhafterweise den begrenzten Platz der Anzeigeeinheit verringern würden.

In einer bevorzugten Ausführungsvariante ist über die Eingabeeinheit die Anzahl der Teilbereiche der Anzeigeeinheit, die Größe und die Lage der Teilbereiche der Anzeigeeinheit einstellbar. Hierdurch wird es für den Benutzer möglich, für ihn besonders wichtige Informationsgehalte in besonders großen und damit gut sichtbaren Teilbereichen der Anzeigeeinheit darzustellen, so dass während der Fahrt diese Informationen besonders schnell erkannt werden können und somit eine Ablenkung vom Straßenverkehr bei der Erfassung der für den Benutzer relevanten Informationen minimal ist. Mit der erfindungsgemäßen Vorrichtung ist insbesondere eine Anpassung an die individuellen Informationswünsche jedes Benutzers möglich, sodass eine geringe Ablenkung vom Straßenverkehrsgeschehen trotz ausreichender Information ermöglicht wird.

In einer besonders bevorzugten Ausführungsvariante weist die Anzeigeeinheit in einem voreingestellten Betriebsmodus drei Teilbereiche auf. Eine solche klar strukturierte Aufteilung der Anzeigeeinheit hat sich als besonders sinnvoll erwiesen, denn es hat sich gezeigt, dass für den Benutzer in der Regel mehrere, jedoch nicht mehr als drei Informationsgehalte besonders relevant sind.

Die Eingabeeinheit ist vorzugsweise eine Lenkradfernbedienung eines Kraftfahrzeugs. Hierdurch wird es für den Benutzer möglich, bestimmte Eingaben, zum Beispiel eine Menüauswahl oder die Einstellung eines Radiosenders, derart vorzunehmen, dass kein Wegbewegen der Hände vom Lenkrad erforderlich ist. Hierdurch wird die Fahrsicherheit erhöht.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen:
- Fig. 1: in schematischer Darstellung die Anzeigeeinheit einer erfindungsgemäßen Vorrichtung mit drei Teilbereichen;
- Fig. 2: in schematischer Darstellung die Anzeigeeinheit einer erfindungsgemäßen Vorrichtung mit lediglich einem Teilbereich;
- Fig. 3: die Anzeigeeinheit einer erfindungsgemäßen Vorrichtung mit drei Teilbereichen, wobei lediglich zwei Teilbereiche zur Darstellung von Informationsgehalten genutzt werden;
- Fig. 4: in schematischer Darstellung die Anzeigeeinheit einer erfindungsgemäßen Vorrichtung mit drei Teilbereichen, wobei alle drei Teilbereiche zur Darstellung von Informationsgehalten gemäß einer ersten Variante genutzt werden; und
- Fig. 5: in schematischer Darstellung die Anzeigeeinheit einer erfindungsgemäßen Vorrichtung mit drei Teilbereichen, wobei alle drei Teilbereiche zur Darstellung von Informationsgehalten gemäß einer zweiten Variante genutzt werden.

### Bester Weg zur Ausführung der Erfindung

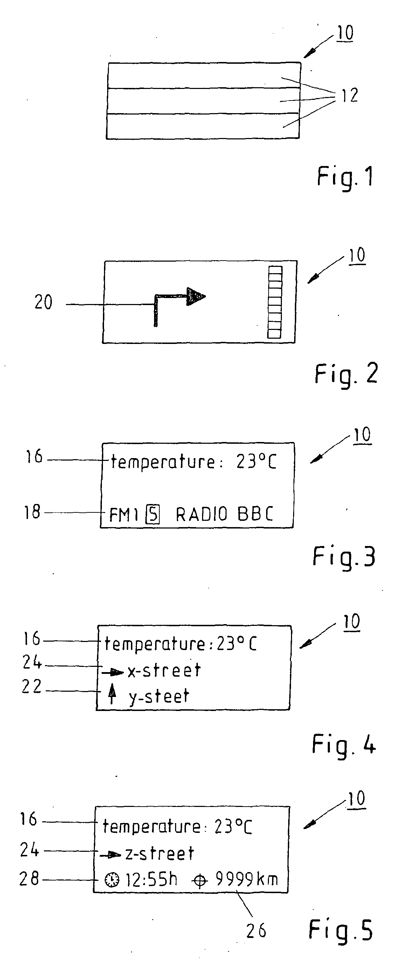

Figur 1 zeigt eine Anzeigeeinheit 10 einer erfindungsgemäßen Vorrichtung in schematischer Darstellung.

Die in mindestens zwei Teilbereiche 12 unterteilbare Anzeigeeinheit 10 ist in diesem Ausführungsbeispiel in drei Teilbereiche 12 untergliedert. In den Teilbereichen 12 lassen sich vordefinierte Informationsgehalte, wie zum Beispiel die Umgebungstemperatur 16 eines Kraftfahrzeugs, die Uhrzeit 28, das Datum, der Tageskilometerzähler 26 eines Kraftfahrzeugs, der Gesamtkilometerzähler eines Kraftfahrzeugs, eine Abbiegeempfehlung 20 mit Angabe des Abstands zum Abbiegepunkt in Form eines Bargraphen, der Name und Speicherplatz 18 eines Rundfunksenders, die Frequenz eines Rundfunksenders, der Name der momentan befahrenen Straße 22 eines Kraftfahrzeugs und/oder der Name der als nächstes zu befahrenden Straße 24 eines Kraftfahrzeugs und weitere, für die Benutzer und/oder Insassen eines Kraftfahrzeugs relevante Informationen darstellen.

Über die (hier nicht dargestellte) Eingabeeinheit der erfindungsgemäßen Vorrichtung kann der Benutzer die für ihn relevanten Informationsgehalte den jeweiligen Teilbereichen 12 der Anzeigeeinheit 10 zuordnen. Hierdurch wird gewährleistet, dass lediglich die für den Benutzer relevanten Informationsgehalte und somit keine überflüssigen Informationsgehalte, die den Benutzer unnötigerweise ablenken, dargestellt werden.

Natürlich ist der Benutzer nicht gezwungen, mehrere Teilbereiche 12 zur Darstellung von Informationsgehalten auszuwählen. Sofern der Benutzer es wünscht, kann er lediglich einen Informationsgehalt, wie zum Beispiel die Fahrtrichtung 20 einer vorgegebenen Strecke, darstellen lassen, wie in Figur 2 schematisch dargestellt ist; es ist nämlich erfindungsgemäß vorgesehen, dass der Benutzer nicht nur die Informationsgehalte zuordnen, sondern auch die Anzahl der Teilbereiche 12 festlegen kann. Optionalerweise kann es weiterhin vorgesehen sein, dass der Benutzer auch die Größe und die Lage der einzelnen Teilbereiche 12 innerhalb der Anzeigeeinheit 10 - zum Beispiel über eine Menüsteuerung - festlegen kann.

Sofern es für den Benutzer wünschenswert ist, mehrere Informationsgehalte gleichzeitig darzustellen, kann er über die Eingabeeinheit eine entsprechende Zuordnung vornehmen. So ist es im Ausführungsbeispiel nach Figur 3 möglich, im oberen Teilbereich 12 der Anzeigeeinheit 10 eine Information über die Umgebungstemperatur 16 und im unteren Teilbereich 12 der Anzeigeeinheit 10 eine Information über den Rundfunksender 18 darzustellen, wobei der mittlere Anzeigebereich einer fahrzeugseitig festgelegten und gesteuerten Information überlassen bleiben kann.

In einem weiteren Ausführungsbeispiel entsprechend Figur 4 ist es beispielsweise möglich, im oberen Teilbereich 12 der Anzeigeeinheit 10 eine Information über die Außentemperatur 16, im mittleren Teilbereich 12 der Anzeigeeinheit 10 eine Information über den Straßennamen einer abbiegenden Straße 24 und im unteren Teilbereich 12 der Anzeigeeinheit 10 eine Information über den Straßennamen der derzeit befahrenen Straße 22 darzustellen.

Mit der erfindungsgemäßen Vorrichtung ist eine Anpassung der Darstellung von Informationen an die Informationswünsche eines jeweiligen Fahrzeuginsassen möglich. Entsprechend Figur 5 ist beispielsweise eine Unterteilung der dritten Zeile der Anzeigeeinheit 10 in zwei Teilbereiche möglich. Hierbei kann sowohl eine Information über die Ankunftszeit 28 als auch über die Zielentfernung 26 dargestellt werden.

Dadurch, dass der Benutzer die Lage und die Größe der einzelnen Teilbereiche 12 definieren kann, wird die für ihn relevante Information immer an der von ihm dafür vorgesehenen Stelle und in der von ihm vorgesehenen Größe in der Anzeigeeinheit 10 erscheinen, wodurch gewährleistet ist, dass der Benutzer die jeweilige, für ihn relevante Information möglichst schnell wahrnehmen kann und daher eine Ablenkung vom Straßenverkehr minimal ist.

Die Erfindung beschränkt sich nicht auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zum Darstellen von Informationen eines Fahrzeug-Informationssystems mittels mindestens einer Anzeigeeinheit (10) sowie mittels mindestens einer Eingabeeinheit,
**dadurch gekennzeichnet,**
- **dass** die Anzeige für mindestens eine Anzeigeeinheit (10) frei konfiguriert werden kann und
- **dass**
- - der gesamten Anzeigeeinheit (10) genau ein vordefinierter Informationsgehalt, zum Beispiel für Fahrzeug, für Navigation und/oder für Rundfunk, über die Eingabeeinheit zugeordnet wird und dieser vordefinierte Informationsgehalt in der Anzeigeeinheit (10) dargestellt wird oder
- - die Anzeigeeinheit (10) in mindestens zwei Teilbereiche (12) unterteilt werden kann, mindestens einem der Teilbereiche (12) der Anzeigeeinheit (10) mindestens ein vordefinierter Informationsgehalt, zum Beispiel für Fahrzeug, für Navigation und/oder für Rundfunk, über die Eingabeeinheit zugeordnet wird und diese vordefinierten Informationsgehalte auf dem oder im jeweils zugeordneten Teilbereich (12) der Anzeigeeinheit (10) dargestellt werden.

2. Verfahren gemäß Anspruch 1,
**dadurch gekennzeichnet,**
**dass** die Anzahl der Teilbereiche (12) der Anzeigeeinheit (10) über die Eingabeeinheit definiert wird.

3. Verfahren gemäß Anspruch 1 oder 2,
**dadurch gekennzeichnet,**
**dass** die Größe und/oder die Lage der Teilbereiche (12) der Anzeigeeinheit (10) über die Eingabeeinheit definiert werden.

4. Verfahren gemäß mindestens einem der Ansprüche 1 bis 3,
**dadurch gekennzeichnet,**
**dass** eine Unterteilung der Anzeigeeinheit (10) in Teilbereiche (12) über die Eingabeeinheit aufgehoben wird.

5. Vorrichtung zum Darstellen von Informationen eines Fahrzeug-Informationssystems mittels mindestens einer Anzeigeeinheit (10) sowie mittels mindestens einer Eingabeeinheit,
**dadurch gekennzeichnet,**
- **dass** der Benutzer die Anzeige für mindestens eine Anzeigeeinheit (10) frei konfigurieren kann und
- **dass**
- - der gesamten Anzeigeeinheit (10) genau ein vordefinierter Informationsgehalt, zum Beispiel für Fahrzeug, für Navigation und/oder für Rundfunk, über die Eingabeeinheit zuordbar ist und dieser vordefinierte Informationsgehalt in der Anzeigeeinheit (10) darstellbar ist oder
- - die Anzeigeeinheit (10) in mindestens zwei Teilbereiche (12) unterteilbar ist, mindestens einem der Teilbereiche (12) der Anzeigeeinheit (10) mindestens ein vordefinierter Informationsgehalt, zum Beispiel für Fahrzeug, für Navigation und/oder für Rundfunk, über die Eingabeeinheit zuordbar ist und diese vordefinierten Informationsgehalte auf dem oder im jeweils zugeordneten Teilbereich (12) der Anzeigeeinheit (10) darstellbar sind.

6. Vorrichtung gemäß Anspruch 5,
**dadurch gekennzeichnet,**
**dass** die Anzahl der Teilbereiche (12) der Anzeigeeinheit (10) über die Eingabeeinheit einstellbar ist.

7. Vorrichtung gemäß Anspruch 5 oder 6,
**dadurch gekennzeichnet,**
**dass** die Größe und/oder die Lage der Teilbereiche (12) der Anzeigeeinheit (10) über die Eingabeeinheit einstellbar sind.

8. Vorrichtung gemäß mindestens einem der Ansprüche 5 bis 7,
**dadurch gekennzeichnet,**
**dass** eine Unterteilung der Anzeigeeinheit (10) in Teilbereiche (12) über die Eingabeeinheit aufhebbar ist.

9. Vorrichtung gemäß mindestens einem der Ansprüche 5 bis 8,
**dadurch gekennzeichnet,**
**dass** auf der Anzeigeeinheit (10) Bedienstrukturen darstellbar sind.

10. Vorrichtung gemäß mindestens einem der Ansprüche 5 bis 9,
**dadurch gekennzeichnet,**
**dass** die Anzeigeeinheit (10) in einem voreingestellten Betriebsmodus drei Teilbereiche (12) aufweist.

11. Vorrichtung gemäß Anspruch 10,
**dadurch gekennzeichnet,**
**dass** die drei Teilbereiche (12) der Anzeigeeinheit (10) in etwa gleich groß und übereinander angeordnet sind.

12. Vorrichtung gemäß mindestens einem der Ansprüche 5 bis 11,
**dadurch gekennzeichnet,**
**dass** die Vorrichtung mit mindestens einem Anzeige-Datenbus eines Fahrzeugs, insbesondere eines Kraftfahrzeugs, verbunden ist.

13. Vorrichtung gemäß mindestens einem der Ansprüche 5 bis 12,
**dadurch gekennzeichnet,**
**dass** die vordefinierten Informationsgehalte als Auswahlmenüs darstellbar sind.

14. Vorrichtung gemäß mindestens einem der Ansprüche 5 bis 13,
**dadurch gekennzeichnet,**
**dass** die Eingabeeinheit eine Lenkrad-Fernbedienung eines Fahrzeugs, insbesondere eines Kraftfahrzeugs, ist.
